# EUROPÄISCHE PATENTANMELDUNG

(11) **EP 3 106 682 A1**
(43) Veröffentlichungstag der Anmeldung: **21.12.2016**
(21) Anmeldenummer: 15172132.1
(22) Anmeldetag: 15.06.2015
(51) Int. Cl.: F16B 31/04, B25B 29/02

(54) **SPANNMUTTER**

(71) Anmelder: Siemens Aktiengesellschaft, 80333 München (DE)
(72) Erfinder: Kury, Peter, 45257 Essen (DE)

(57) **Zusammenfassung**

Eine Spannmutter (1), umfassend einen im Wesentlichen ringförmigen Mutterkörper, welcher eine radiale Außenfläche (2), eine zentrale zylindrische Öffnung (6) mit einem Innengewinde (8), sowie eine erste und eine zweite axiale Außenfläche, die an entgegengesetzten axialen Seiten angeordnet und kreisscheibenförmig sind, bildet, wobei in den Mutterkörper eine Mehrzahl von zylindrischen Öffnungen (16) mit jeweils einem Innengewinde eingebracht ist, die sich von der ersten zur zweiten axialen Außenfläche erstrecken, soll besonders große Freiheiten hinsichtlich der Auslegung insbesondere der Stülpverformung erlauben. Dazu beträgt der Winkel α zwischen
- der Achse (22) einer zylindrischen Öffnung (16) gegen
- eine diese Achse (22) schneidende Senkrechte zur Achse (4) der zentralen zylindrischen Öffnung (6) weniger als 90°.

## Beschreibung

Die Erfindung betrifft eine Spannmutter, umfassend einen im Wesentlichen ringförmigen Mutterkörper, welcher eine radiale Außenfläche, eine zentrale zylindrische Öffnung mit einem Innengewinde, sowie eine erste und eine zweite axiale Außenfläche, die an entgegengesetzten axialen Seiten angeordnet und kreisscheibenförmig sind, bildet, wobei in den Mutterkörper eine Mehrzahl von zylindrischen Öffnungen mit jeweils einem Innengewinde eingebracht ist, die sich von der ersten zur zweiten axialen Außenfläche erstrecken.

Spannmuttern sind Muttern, in deren Mutterkörper in der Regel parallel zur zentralen Gewindeöffnung weitere Gewindeöffnungen eingebracht sind. Sie werden auch als Vielfach-Druckschrauben-Spannelemente (multiple jackbolt tensioner, MJT) bezeichnet. Sie werden beispielsweise unter dem Markennamen NordLock® SuperBolt® vertrieben und sind dem Fachmann aus der US 5,083,889 A bekannt.

Die Spannmutter wird auf einen zentralen Bolzen geschraubt, welcher dann mit mehreren zum zentralen Bolzen parallel ausgerichteten Druckschrauben in den in den Mutterkörper eingebrachten Gewindeöffnungen auf Zug gespannt wird. Neben Aspekten von Montagezeitersparnis, einfacher Handhabung (es kann übliches Handwerkzeug verwendet werden) usw. ist einer der Hauptvorteile solcher Spannelemente, dass die Belastung des Gewindes des zentralen Bolzens durch eine Stülpverformung des Mutterkörpers gleichmäßiger ausfällt als bei einer konventionellen Starrmutter, da die ersten Gewindegänge bei der elastischen Verformung des Mutterkörpers entlastet werden. Die Stülpverformung ist einerseits gewünscht, sorgt aber andererseits auch für Biegemomente innerhalb der Druckschrauben sowie einen Schiefstand derselben.

Die Stülpverformung hängt direkt von der Geometrie des Mutterkörpers sowie den elastischen Konstanten des Grundmaterials des Mutterkörpers ab und kann daher nicht unabhängig von der axialen Zugkraft eingestellt werden. In gewissen, durch den verfügbaren Bauraum gegebenen Grenzen kann zwar die elastische Verformung des Mutterkörpers durch die radiale Position der Druckschrauben in Abhängigkeit von den Axialkräften eingestellt werden. Bei gegebener Geometrie (Bauraum), Axialkraft und Mutterkörper-Material sind jedoch keine Design-Freiheitsgrade mehr vorhanden.

Es ist daher Aufgabe der Erfindung, eine Spannmutter der eingangs genannten Art anzugeben, welche besonders große Freiheiten hinsichtlich der Auslegung insbesondere der Stülpverformung erlaubt.

Diese Aufgabe wird erfindungsgemäß dadurch gelöst, dass der Winkel α zwischen
- der Achse einer zylindrischen Öffnung gegen
- eine diese Achse schneidende Senkrechte zur Achse der zentralen zylindrischen Öffnung
weniger als 90° beträgt.

Die Erfindung geht dabei von der Überlegung aus, dass die Stülpverformung letztlich dadurch erzeugt wird, dass die Axialkraft der Druckschrauben eine radiale Komponente hat, da die effektiv wirksame Kraft innerhalb des Mutterkörpers in der Linie zwischen Angriffspunkt (Spitze der Druckschraube) und effektivem Presspunkt (nahe des oberen Innenrands des zentralen Gewindes) wirkt. Diese Linie steht nicht parallel zur Achse der Spannmutter. Durch eine Neigung der Druckschrauben um einen Winkel α kann eine radiale Komponente der Axialkraft in weiten Grenzen frei gewählt werden, zumindest unabhängig vom Höhen-Seiten-Verhältnis des Mutterkörpers. Wird eine größere radiale Komponente benötigt, so kann eine Spannmutter mit stärker geneigten Druckschraubengewinden gewählt werden. Dadurch steigt die radiale Komponente, ohne dass die Druckschrauben unter Erhöhung der Axialkraft stärker angezogen werden müssen.

Vorteilhafterweise sind die Achsen jeder zylindrischen Öffnung für die Druckschrauben im gleichen Winkel gegen die Achse der zentralen zylindrischen Öffnung geneigt. Hierdurch ergibt sich eine größtmögliche Symmetrie und Gleichmäßigkeit hinsichtlich der Kräfteverteilung.

Weiterhin ist vorteilhafterweise eine Anzahl n der Mehrzahl von zylindrischen Öffnungen für die Druckschrauben bezogen auf die Achse der zentralen zylindrischen Öffnung in einer n-zähligen Radiärsymmetrie angeordnet ist. Die Radiärsymmetrie (auch Drehsymmetrie) ist eine Form der Symmetrie, bei der die Drehung eines Objektes um einen gewissen Winkel um eine Gerade (Drehachse, Symmetrieachse) das Objekt wieder mit sich selbst zur Deckung bringt. Man spricht von einer n-zähligen Radiär- oder Drehsymmetrie, wenn eine Drehung um 360°/n das Objekt auf sich selbst abbildet. Auch hierdurch ergibt sich eine größtmögliche Symmetrie und Gleichmäßigkeit hinsichtlich der Kräfteverteilung.

Vorteilhafterweise entspricht dabei die Zahl n der Mehrzahl von zylindrischen Öffnungen, d. h. alle zylindrischen Öffnungen für Druckschrauben sind in der n-zähligen Radiärsymmetrie angeordnet.

In vorteilhafter Ausgestaltung der Spannmutter ist der Durchmesser der zylindrischen Öffnungen für die Druckschrauben geringer als der Durchmesser der zentralen zylindrischen Öffnung.

Ein System umfasst vorteilhafterweise eine oben beschriebene Spannmutter sowie eine Unterlegscheibe, deren Innendurchmesser im Wesentlichen dem der zentralen zylindrischen Öffnung der Spannmutter entspricht, wobei eine axiale Oberfläche der Unterlegscheibe nach außen hin in einem Winkel α' zur Achse der Unterlegscheibe abfallend ausgebildet ist, wobei der Winkel mindestens dem Winkel α entspricht. Eine derartige Unterlegscheibe bildet eine Auflagefläche für die Spitzen der Druckschrauben. Wird die Auflagefläche wie beschrieben geneigt, sorgt dies für ein möglichst senkrechtes Auftreffen der Druckschraubenspitzen auf die Unterlegscheibe und es können Biegemomente in den Druckschrauben minimiert werden.

Um diese Auflagefläche zu optimieren, entspricht der Winkel α' vorteilhafterweise höchstens dem Winkel α plus dem Quotient aus maximaler Überdeckungsreduktion der zentralen zylindrischen Öffnung der Spannmutter und axialer Höhe der Spannmutter. Unter der Überdeckungsreduktion wird hierbei die absolute erlaubte Änderung der Gewindeüberdeckung des zentralen Gewindes infolge der Stülpverformung bezeichnet. Diese sollte vorteilhafterweise relativ zwischen 5 %-50 % betragen. Idealerweise entspricht der Winkel α' genau dem oben bezeichneten Summenwert.

Die Unterlegscheibe ist vorteilhafterweise rotationssymmetrisch ausgebildet. Dies erleichtert die Montage und deren Herstellung.

Das beschriebene System umfasst vorteilhafterweise weiter eine Anzahl von Druckschrauben, die in die zylindrischen Öffnungen eingeschraubt sind. Hierbei werden die Druckschrauben am radial weiter außen liegenden Ende der zylindrischen Öffnungen eingesetzt, so dass sie sich beim Einschrauben nach innen bewegen.

Das beschriebene System ist vorteilhafterweise auf einem Gewindebolzen eines Bauteils angeordnet. Dadurch kann der Gewindebolzen mit den oben beschriebenen Vorteilen auf Zug gespannt werden.

Die mit der Erfindung erzielten Vorteile bestehen insbesondere darin, dass durch eine Schrägstellung der Druckschrauben einer Spannmutter die gewünschte Vergleichmäßigung der Gewindebelastung durch Stülpverformung bereits bei geringeren Axialkräften genutzt werden kann. Das ist in allen Anwendungsfällen sinnvoll, wo die Belastung des zentralen Gewindes problematischer als die Zugbelastung des zentralen Bolzens ist. Bei Verwendung einer geneigten Auflagefläche einer Unterlegscheibe können Biegemomente in den Druckschrauben minimiert werden.

Die Erfindung wird anhand von Zeichnungen näher erläutert. Darin zeigen:
- FIG 1: eine auf einen Gewindebolzen eines Bauteils geschraubte Spannmutter nach dem Stand der Technik im Längsschnitt mit Darstellung von Kräften und Stülpverformung,
- FIG 2: eine schematische Darstellung der Spannmutter im Längsschnitt,
- FIG 3: eine Darstellung der Kraftflüsse in der Spannmutter,
- FIG 4: eine schematische Darstellung einer Spannmutter mit geneigten Gewindegängen für Druckschrauben im Längsschnitt,
- FIG 5: eine Darstellung der Kraftflüsse in der Spannmutter, und
- FIG 6: eine schematische Darstellung der Spannmutter mit Druckschrauben und Unterlegscheibe.

Gleiche Teile sind in allen Figuren mit den gleichen Bezugszeichen versehen.

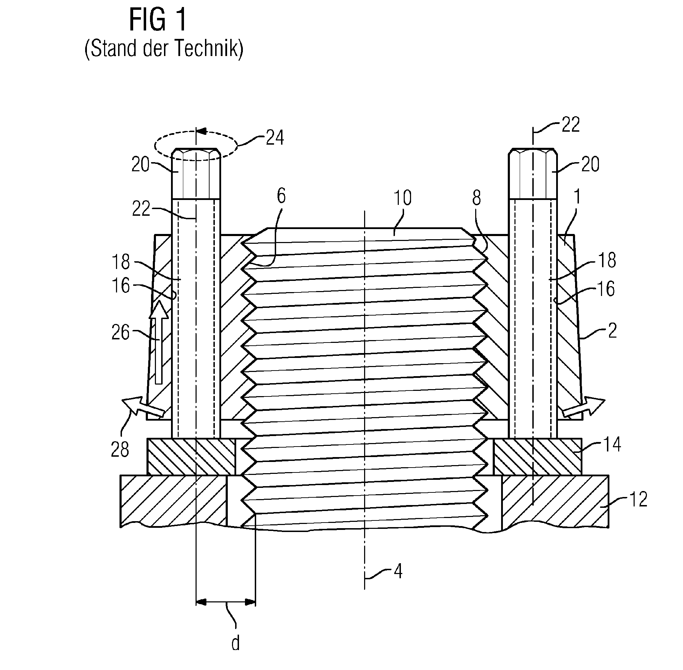

Die FIG 1 zeigt im Längsschnitt eine Spannmutter 1 gemäß dem Stand der Technik. Diese ist ringförmig ausgestaltet und weist eine zylindermantelförmige radiale Außenfläche 2 auf. Konzentrisch zur Achse 4 dieser Außenfläche 2 ist eine zentrale zylindrische Öffnung 6 in der Mitte der Spannmutter 1 eingebracht, welche die Spannmutter 1 in axialer Richtung durchmisst und mit einem Innengewinde 8 versehen ist.

Die Spannmutter 1 dient dazu, einen Gewindebolzen 10 eines Bauteils 12 auf Zug zu spannen. Hierzu ist um den Gewindebolzen 10 zunächst eine kreisscheibenförmige Unterlegscheibe 14 auf das Bauteil 12 gelegt, deren Innendurchmesser geringfügig größer als der Außendurchmesser des Gewindebolzens 10 ist. Sodann ist die Spannmutter 1 auf den Gewindebolzen 10 geschraubt.

Zur Fixierung unter möglichst gleichmäßiger Kraftverteilung weist die Spannmutter 1 in zur Achse 4 n-zählig radiärsymmetrischer Anordnung insgesamt n zylindrische Öffnungen 16 mit Innengewinde auf, die parallel zur Achse 4 der zentralen zylindrischen Öffnung 6 verlaufen und in die jeweils eine Druckschraube 18 eingeschraubt ist. Ihr Durchmesser ist deutlich geringer als der der zentralen zylindrischen Öffnung 6. In der Schnittzeichnung der FIG 1 sind zwei Druckschrauben 18 zu sehen. Die n Druckschrauben 18 sind identisch ausgebildet. Ihr Schraubenkopf 20 ist für einen Außenantrieb in Form eines Außen-Sechskants ausgebildet.

Die Druckschrauben 18 werden nun um ihre jeweilige Achse 22 gedreht, angedeutet durch Kreispfeil 24. Die resultierende Gegenkraft, angedeutet durch Pfeil 26 führt in Verbindung mit dem radialen Abstand d der Angriffspunkte zwischen Achse 22 der Druckschrauben 18 und Innengewinde 8 zu einer Stülpverformung der Spannmutter 1 derart, dass am in FIG 1 oberen, d. h. vom Bauteil 12 entfernten Bereich radial nach innen verformt wird, während am dem Bauteil 12 nahgelegensten Bereich eine Verformung radial nach außen erfolgt, gezeigt durch Pfeil 28.

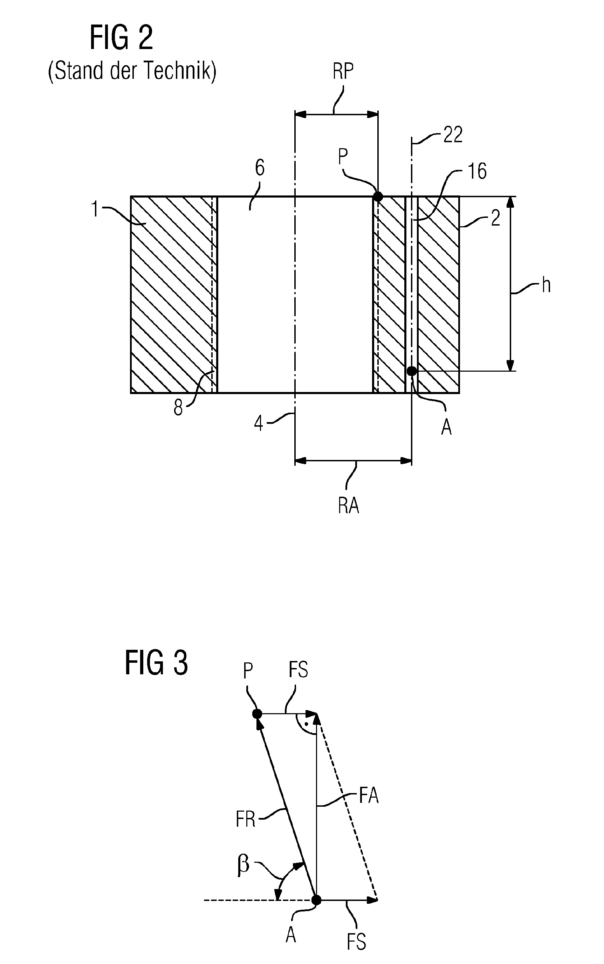

Der Verformungsmechanismus wird anhand der FIG 2 und FIG 3 noch näher erläutert. FIG 2 zeigt schematisch allein die Spannmutter 1 aus FIG 1 in gleicher Ansicht, jedoch der Übersicht halber mit nur einer zylindrischen Öffnung 16. FIG 2 zeigt zunächst die für die Stülpverformung relevanten geometrischen Werte: Dies ist zunächst der Angriffspunkt A am dem Bauteil 12 zugewandten Ende der zylindrischen Öffnung 16 in der Achse 22 mit dem Radius RA, an dem die durch das Einschrauben der Druckschrauben 18 erzeugte, auf die Spannmutter 1 wirkende axiale Kraft angreift. Weiterhin ist der Presspunkt P zu nennen, der am dem Bauteil 12 abgewandten axialen Ende der Spannmutter 1 am Innengewinde 8 der zentralen zylindrischen Öffnung 6 liegt. Hier greift letztlich die Gegenkraft an. Der Presspunkt P liegt auf dem Radius RP, der dem Radius des Innengewindes 8 entspricht. Es gilt d = RA - RP. Der auf die Achse 4 bezogene Abstand zwischen Angriffspunkt A und Presspunkt P ist die Höhe h.

FIG 3 zeigt nun die sich einstellenden Kräfteverhältnisse in der Konfiguration nach FIG 2. Die Stülpverformung wird dadurch erzeugt, dass die Axialkraft FA der Druckschrauben 18 eine radiale Komponente hat, da die effektiv wirksame Kraft FR innerhalb des Mutterkörpers in der Linie zwischen Angriffspunkt A und Presspunkt P wirkt. Diese radiale Komponente ist die Stülpverformungskraft FS, die sich wie in FIG 3 gezeigt aus den Regeln zur Vektoraddition von Kräften ergibt. Für den Winkel β zwischen resultierender Kraft FR und zur Achse 4 senkrechter Ebene (entspricht der Wirkungsrichtung der radialen Stülpverformungskraft FS) gilt: cot β = FS ÷ FA. Er ist aber auch aus den geometrischen Abmessungen der Spannmutter 1 ermittelbar, hier gilt: cot β = (RA - RP) ÷ h. Die Stülpverformungskraft FS ist damit vollständig durch die Anzugskraft FA sowie die geometrischen Verhältnisse der Spannmutter 1 gegeben, nämlich durch FS = FA × (RA - RP) ÷ h.

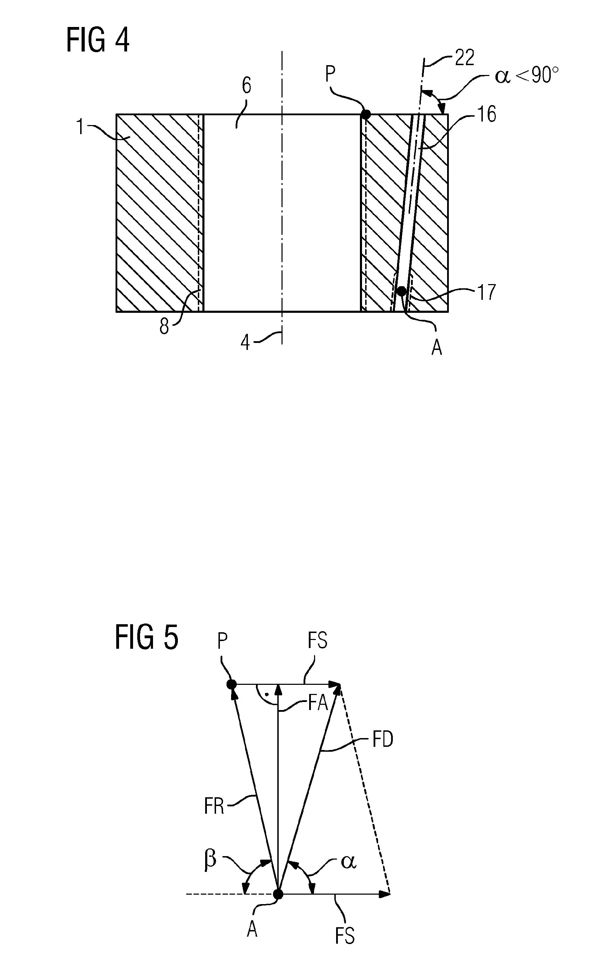

Um hier eine größere Flexibilität zur ermöglichen, wird die Spannmutter 1 wie in FIG 4 gezeigt modifiziert. FIG 4 zeigt die Ansicht wie in FIG 2 und wird nur anhand ihres Unterschieds zu FIG 2 erklärt. Dieser besteht darin, dass der Winkel α der Achse 22 der zylindrischen Öffnung 16 für die Druckschrauben 18 mit der radialen Ebene nicht mehr 90° beträgt, sondern weniger als 90°. Die radiärsymmetrische Anordnung der zylindrischen Öffnungen 16 bleibt hierbei erhalten, jede Öffnung 16 weist also denselben Winkel α auf. Das jeweilige Innengewinde 17 in den zylindrischen Öffnungen 16 ist nur im unteren Bereich angeordnet und erstreckt sich nicht über die gesamte Höhe der zylindrischen Öffnungen 16. Dadurch, dass derartige Spannmuttern 1 mit unterschiedlichen Winkeln α zur Verfügung gestellt werden, entsteht ein neuer Freiheitsgrad hinsichtlich der Stülpverformung, wie anhand der FIG 5 erläutert wird, die die Kraftverhältnisse in der Konfiguration nach FIG 4 zeigt, analog zu FIG 3 für FIG 2.

Wiederum wirkt die resultierende Kraft FR in der Linie zwischen Angriffspunkt A und Presspunkt P, die im Winkel β angeordnet ist. Die Druckkraft FD der Druckschrauben 18 wirkt nun jedoch nicht mehr in axialer Richtung, sondern entlang der Achse 22 mit dem Winkel α. Hierdurch vergrößert sich die Kraft FS, es gilt: FS = FA × ((RA - RP) ÷ h + cot α). Für den Winkel α gilt damit: α = arc cot (FS ÷ FA - (RA - RP) ÷ h). Die folgende Tabelle zeigt den benötigten Winkel α in Grad bei gegebenem Größenverhältnis (RA - RP) ÷ h der Spannmutter 1 und gewünschtem Verhältnis von Stülpverformungskraft FS zu Axialkraft A:

| (R_A-R_P) /h | 0, 025 | 0,050 | 0,075 | 0,100 | 0,125 | 0,150 | 0,175 | 0,200 | 0,225 | 0,250 | 0,275 | 0,300 |
|---|---|---|---|---|---|---|---|---|---|---|---|---|
| F_S/_F_A | | | | | | | | | | | | |
| 0, 025 | 90,00 | | | | | | | | | | | |
| 0, 050 | 88,57 | 90, 00 | | | | | | | | | | |
| 0, 075 | 87,14 | 88,57 | 90,00 | | | | | | | | | |
| 0, 100 | 85,71 | 87,14 | 88,57 | 90,00 | | | | | | | | |
| 0, 125 | 84,29 | 85,71 | 87,14 | 88,57 | 90,00 | | | | | | | |
| 0, 150 | 82, 87 | 84,29 | 85,71 | 87,14 | 88,57 | 90,00 | | | | | | |
| 0, 175 | 81,47 | 82, 87 | 84,29 | 85,71 | 87,14 | 88,57 | 90,00 | | | | | |
| 0,200 | 80, 07 | 81,47 | 82, 87 | 84,29 | 85,71 | 87,14 | 88,57 | 90,00 | | | | |
| 0,225 | 78, 69 | 80, 07 | 81,47 | 82, 87 | 84,29 | 85,71 | 87,14 | 88,57 | 90,00 | | | |
| 0,250 | 77,32 | 78, 69 | 80, 07 | 81,47 | 82, 87 | 84,29 | 85,71 | 87,14 | 88,57 | 90,00 | | |
| 0,275 | 75,96 | 77,32 | 78, 69 | 80, 07 | 81,47 | 82, 87 | 84,29 | 85,71 | 87,14 | 88,57 | 90, 00 | |
| 0,300 | 74, 62 | 75,96 | 77,32 | 78, 69 | 80, 07 | 81,47 | 82, 87 | 84,29 | 85,71 | 87,14 | 88,57 | 90, 00 |
| 0,325 | 73,30 | 74, 62 | 75,96 | 77,32 | 78, 69 | 80,07 | 81,47 | 82, 87 | 84,29 | 85,71 | 87,14 | 88,57 |
| 0,350 | 72, 00 | 73,30 | 74,62 | 75,96 | 77,32 | 78, 69 | 80, 07 | 81,47 | 82, 87 | 84,29 | 85,71 | 87,14 |
| 0,375 | 70,71 | 72, 00 | 73,30 | 74, 62 | 75,96 | 77,32 | 78, 69 | 80, 07 | 81,47 | 82, 87 | 84,29 | 85,71 |
| 0,400 | 69,44 | 70,71 | 72, 00 | 73,30 | 74, 62 | 75,96 | 77,32 | 78, 69 | 80, 07 | 81,47 | 82, 87 | 84,29 |
| 0,425 | 68,20 | 69,44 | 70,71 | 72, 00 | 73,30 | 62 | 75,96 | 77,32 | 78, 69 | 80, 07 | 81,47 | 82, 87 |
| 0,450 | 66, 97 | 68,20 | 69,44 | 70,71 | 72, 00 | 73,30 | 74, 62 | 75,96 | 77,32 | 78, 69 | 80, 07 | 81,47 |
| 0,475 | 65,77 | 66, 97 | 68,20 | 69,44 | 70,71 | 72,00 | 73,30 | 62 | 75,96 | 77,32 | 78, 69 | 80, 07 |
| 0,500 | 64,59 | 65,77 | 66, 97 | 68,20 | 69,44 | 70,71 | 72, 00 | 73,30 | 74, 62 | 75,96 | 77,32 | 78, 69 |

Werden höhere Stülpverformungskräfte FS schon bei geringen Axialkräften FA gewünscht, kann eine Spannmutter 1 mit kleinerem Winkel α verwendet werden.

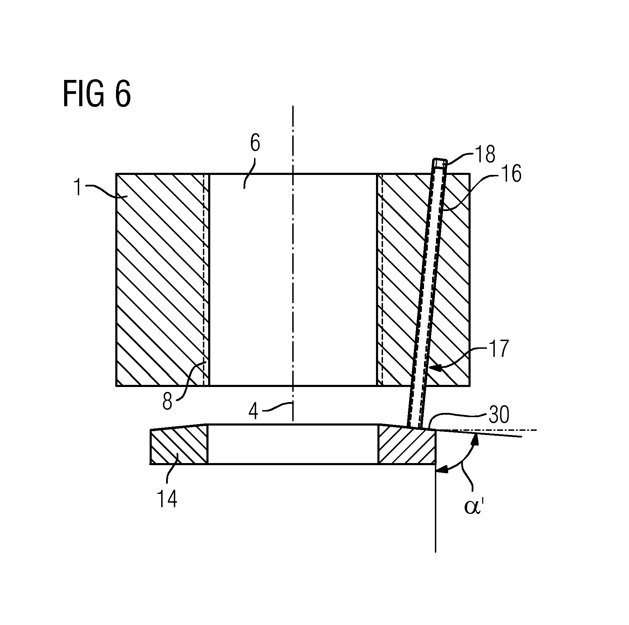

FIG 6 zeigt schließlich die Darstellung aus FIG 5 zusätzlich mit eingebrachter Druckschraube 18 und einer modifizierten Unterlegscheibe 14. Die Unterlegscheibe 14 weist eine der Spannmutter 1 zugewandte nach außen abfallende Oberfläche 30 auf. Die der Spannmutter 1 abgewandte Oberfläche ist weiter in radialer Richtung eben. Die Unterlegscheibe 14 ist rotationssymmetrisch ausgebildet.

Die Oberfläche 30 ist gegen die Achse 4 in einem Winkel α' ausgerichtet. Dieser entspricht mindestens dem Winkel α. Er ist jedoch in der FIG 6 noch geringfügig größer, da für ein optimales senkrechtes Auftreffen der Druckschrauben 18 auf die Oberfläche 30 auch die Stülpverformung zu berücksichtigen ist. Der Korrekturbetrag Δα, wobei α' = α + Δα ergibt sich aus der Größe der tatsächlichen elastischen Stülpverformung der Spannmutter 1. Diese ist konstruktiv gegeben und ergibt sich aus der absoluten Überdeckungsreduktion ΔH1 des Innengewindes 8 der zentralen zylindrischen Öffnung 6. Der Korrekturbetrag Δα kann abgeschätzt werden durch: Δα = ΔH1 ÷ h. Somit kann die ideale Unterlegscheibe 14 für eine gegebene Spannmutter 1 ermittelt werden, indem deren Winkel α' aus dem Winkel α, der Überdeckungsreduktion ΔH1 und der axialen Höhe h bestimmt wird.

## Patentansprüche

1. Spannmutter (1),
umfassend einen im Wesentlichen ringförmigen Mutterkörper, welcher eine radiale Außenfläche (2), eine zentrale zylindrische Öffnung (6) mit einem Innengewinde (8),
sowie eine erste und eine zweite axiale Außenfläche, die an entgegengesetzten axialen Seiten angeordnet und kreisscheibenförmig sind, bildet, wobei in den Mutterkörper eine Mehrzahl von zylindrischen Öffnungen (16) mit jeweils einem Innengewinde eingebracht ist, die sich von der ersten zur zweiten axialen Außenfläche erstrecken,
**dadurch gekennzeichnet, dass**
der Winkel α zwischen
- der Achse (22) einer zylindrischen Öffnung (16) gegen
- eine diese Achse (22) schneidende Senkrechte zur Achse (4) der zentralen zylindrischen Öffnung (6) weniger als 90° beträgt.

2. Spannmutter (1) nach Anspruch 1,
bei der die Achsen (22) jeder zylindrischen Öffnung (16) im gleichen Winkel gegen die Achse (4) der zentralen zylindrischen Öffnung (6) geneigt sind.

3. Spannmutter (1) nach einem der vorhergehenden Ansprüche,
bei der eine Anzahl n der Mehrzahl von zylindrischen Öffnungen (16) bezogen auf die Achse (4) der zentralen zylindrischen Öffnung (6) in einer n-zähligen Radiärsymmetrie angeordnet ist.

4. Spannmutter (1) nach Anspruch 3,
bei der n der Mehrzahl von zylindrischen Öffnungen (16) entspricht.

5. Spannmutter (1) nach einem der vorherigen Ansprüche,
bei der der Durchmesser der zylindrischen Öffnungen (16) geringer ist als der Durchmesser der zentralen zylindrischen Öffnung (6).

6. System,
umfassend eine Spannmutter (1) nach einem der vorhergehenden Ansprüche sowie eine Unterlegscheibe (14), deren Innendurchmesser im Wesentlichen dem der zentralen zylindrischen Öffnung (6) der Spannmutter (1) entspricht,
wobei eine axiale Oberfläche der Unterlegscheibe (14) nach außen hin in einem Winkel α' zur Achse der Unterlegscheibe (14) abfallend ausgebildet ist,
wobei der Winkel α' mindestens dem Winkel α entspricht.

7. System nach Anspruch 6,
bei dem der Winkel α' höchstens dem Winkel α plus dem Quotient aus maximaler Überdeckungsreduktion (ΔH1) der zentralen zylindrischen Öffnung der Spannmutter (1) und axialer Höhe (h) der Spannmutter (1) entspricht.

8. System nach Anspruch 6 oder 7,
bei dem die Unterlegscheibe (14) rotationssymmetrisch ausgebildet ist.

9. System nach einem der Ansprüche 6 bis 8,
weiter umfassend eine Anzahl von Druckschrauben (18), die in die zylindrischen Öffnungen (16) eingeschraubt sind.

10. System nach Anspruch 9,
welches auf einem Gewindebolzen (10) eines Bauteils (12) angeordnet ist.
